Europäisches Patentamt

European Patent Office

Office européen des brevets

(19)

(11) Numéro de publication: **0 268 505 B1**

(12)

# FASCICULE DE BREVET EUROPEEN

(45) Date de publication de fascicule du brevet:
06.11.91

(51) Int. Cl.5: **B23P 15/00**, F23R 3/08

(21) Numéro de dépôt: 87402128.0

(22) Date de dépôt: 24.09.87

(54) **Procédé de réalisation d'un film de refroidissement pour chambre de combustion de turbomachine, film ainsi réalisé et chambre de combustion le comportant.**

(30) Priorité: 25.09.86 FR 8613370

(43) Date de publication de la demande:
25.05.88 Bulletin 88/21

(45) Mention de la délivrance du brevet:
06.11.91 Bulletin 91/45

(84) Etats contractants désignés:
DE FR GB

(56) Documents cités:
EP-A- 0 049 190          DE-A- 2 622 234
FR-A- 1 510 874          FR-A- 2 217 548
FR-A- 2 440 524          FR-A- 2 450 349
FR-A- 2 538 508

(73) Titulaire: SOCIETE NATIONALE D'ETUDE ET
DE CONSTRUCTION DE MOTEURS D'AVIA-
TION, "S.N.E.C.M.A."
2, Boulevard du Général Martial Valin
F-75015 Paris(FR)

(72) Inventeur: Bouillot, Pierre André
Rés. La Roserai Escalier F Rue G. Péri
F-91330 Yerres(FR)
Inventeur: Genet, Claude Armand Léon
42, rue Voltaire
F-91270 Vigneux Sur Seine(FR)

(74) Mandataire: Moinat, François et al
S.N.E.C.M.A. Service des Brevets Boîte Postale 81
F-91003 Evry Cédex(FR)

## Description

La présente invention concerne le refroidissement pariétal des parois des chambres de combustion de turbomachine et plus précisément un procédé de réalisation d'un dispositif de création d'un film pariétal interne pour une paroi de chambre, le dispositif de création du film (c'est à dire virole possédant une chambre annulaire percée d'une rangée d'orifices d'entrée d'air qui pénètre dans la chambre par une fente annulaire) étant dans la suite du texte assimilé au film qu'il produit et appelé par simplification "le film de refroidissement".

La température interne des chambres de combustion étant très élevée, il est courant d'utiliser le principe dit du "film cooling" pour refroidir les parois de la chambre, ce procédé consistant à former une pellicule d'air sur la face interne de la paroi afin de la soustraire à l'action directe de la flamme.

Le principal problème que pose ce procédé est de ralentir suffisamment à une vitesse voulue, égale à celle des gaz, l'air interne de refroidissement pour qu'il s'écoule le long de la face interne de la paroi à refroidir en y formant une pellicule régulière.

La demanderesse a déjà donné une solution à ce problème dans le brevet FR 2 450 349 en réalisant une protubérance annulaire dont la partie radiale de la paroi est percée de plusieurs rangées d'orifices d'entrée d'air en quinconce, l'airs s'écoulant le long de la paroi aval de la chambre par une fente annulaire réalisée entre ladite paroi et une languette aval interne.

La présente invention propose un moyen de réalisation facile à mettre en oeuvre de ce type de films de refroidissement.

Dans les chambres de combustion des turbomachines modernes à haut rendement, les dimensions des chambres ont pu être diminuées mais cette diminution des dimensions, favorable aux performances poids/puissance de la turbomachine, accroît la difficulté de réaliser lesdites chambres.

En effet les viroles unitaires à partir desquelles sont réalisées les chambres de combustion doivent former des structures géométriques sensiblement identiques à celles des viroles de chambre de gros volume, dans des dimensions considérablement réduites. Dès lors, les procédés de réalisation traditionnels sont très difficiles à mettre en oeuvre.

Parmi ces procédés traditionnels, on citera pour mémoire le brevet FR 2 206 440 dans lequel le film est réalisé en deux parties, la paroi amont et la languette étant constituées par le bord aval d'une virole amont interne tandis que le corps de la poche annulaire et la paroi aval sont constitués par la virole aval venant entourer la virole interne amont sur laquelle elle est soudée. Le brevet FR 2 538 508 présente une simplification du procédé précédent avec toujours un film en deux parties.

Les documents FR-A-2 440 524 et FR-A-1 510 874 (représentant l'état de la technique le plus proche) montrent également des films de refroidissement mais dont la réalisation ne présente pas de difficultés particulières car les viroles aval de la chambre de combustion ont un diamètre nettement supérieur à celui des viroles amont qu'elles entourent et la poche d'entrée d'air du film de refroidissement ne comporte pas de protubérance d'entrée, ni de fente annulaire aval rétrécie par rapport à la poche.

Le procédé selon l'invention vise à réaliser de façon simple une poche annulaire d'entrée d'air et de tranquillisation du film, de diamètre plus important que celui de la fente annulaire aval d'éjection d'air dans la chambre, dans une virole réalisant un film monobloc à la différence des films en deux parties des brevets précités, ceci afin d'en accroître la rigidité structurelle de façon notable, tout en simplifiant la structure des parois des chambres de combustion.

L'invention a également pour but de permettre la réalisation de films de refroidissement de très faibles dimensions qui conservent les propriétés des films de gros volume, alors que les procédés de réalisation de ces derniers ne sont pas facilement applicables aux films actuels.

L'invention a donc pour objet un procédé de réalisation d'un dispositif de création d'un film de refroidissement de faible longueur pour chambre de combustion de grand diamètre de turbomachine d'aviation, ledit dispositif comportant une paroi amont de forme généralement cylindrique, une chambre annulaire alimentée en air par des trous et communiquant avec l'intérieur de la chambre par une fente annulaire formée entre la paroi aval de la chambre et une languette disposée dans le prolongement de la paroi amont, procédé selon lequel :

- on réalise une ébauche circulaire au tour, ladite ébauche comportant une partie amont de forme générale cylindrique et une partie aval renflée de forme générale cylindro-tronconique ;
- on usine dans la partie aval un logement tronconique débouchant vers l'aval, comportant une face interne d'axe confondu avec celui de l'ébauche et une face externe comportant une double courbure, les deux faces définissant deux ailes aval l'une interne, l'autre externe ;
- on déforme au moins une des deux ailes aval par repoussage pour former d'une part la paroi aval du film de refroidissement et d'autre part sa languette interne ;
- on perce des rangées d'orifices dans la partie radiale séparant la languette et la paroi aval.

L'invention a également pour objet un film de refroidissement de virole interne ou externe de chambre de combustion annulaire de turbomachine de grand diamètre comportant une chambre annulaire convergente de tranquillisation, réalisé suivant le procédé précité.

Enfin, l'invention a aussi pour objet les chambres de combustion annulaires de turbomachines d'aviation comportant sur une de leurs parois interne ou externe au moins un film de refroidissement annulaire tel que décrit et réalisé selon l'invention, ledit film étant soudé entre une virole amont et une virole aval de la paroi de la chambre.

D'autres caractéristiques du procédé de réalisation et du film ainsi réalisé seront précisées dans la description complémentaire qui va suivre, accompagnée des planches de dessins, figurant de façon non limitative, le procédé selon l'invention et un mode d'application à une chambre de combustion.

Parmi ces planches :
- la figure 1 montre, schématisée en demi-coupe longitudinale une chambre de combustion annulaire comportant un film de refroidissement réalisé selon le procédé de l'invention ;
- la figure 2 montre le détail II de la figure 1, à grande échelle ;
- les figures 3a à 3e montrent les étapes du procédé de réalisation du film, selon une variante avec déformation de l'aile aval externe de l'ébauche par moletage, pour une virole externe de chambre annulaire.
- les figures 4a à 4d montrent les étapes du procédé de réalisation du film selon une seconde variante avec déformation de l'aile aval interne de l'ébauche par moletage, également pour une virole externe de chambre annulaire.

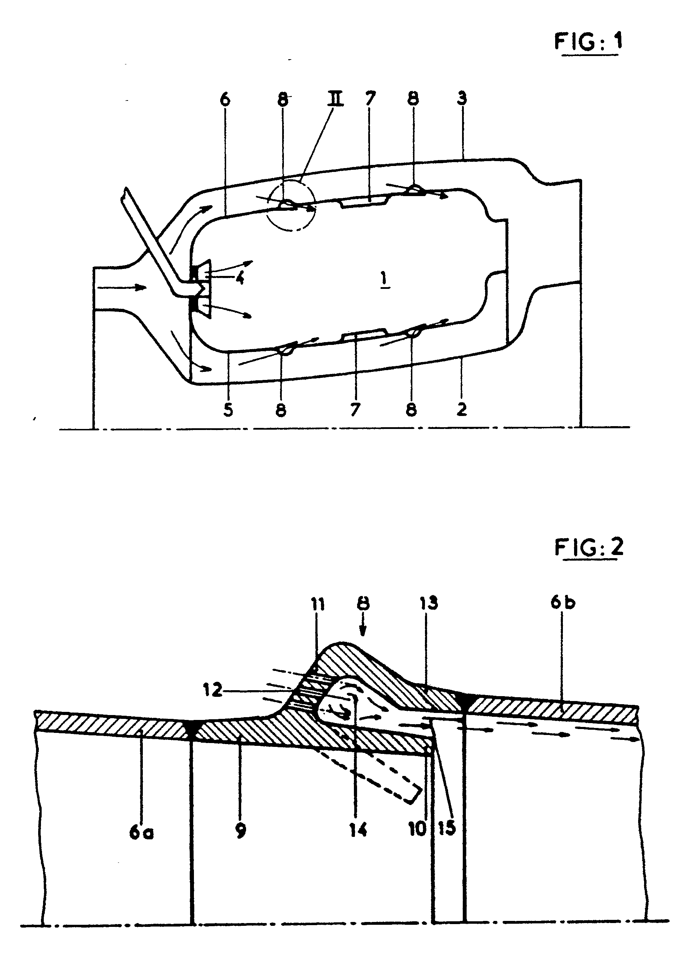

En référence à la figure 1, une chambre de combustion annulaire 1 est disposée entre un carter interne 2 et un carter externe 3 délimitant une veine d'air issu d'un compresseur non représenté. Une fraction de l'air comprimé pénètre dans la chambre par un dispositif 4 combiné d'injection d'air et de carburant, pour que le mélange air-carburant y soit brûlé, tandis que la fraction restante de l'air comprimé enveloppe les parois interne 5 et externe 6 de la chambre. Une partie de cet air pénètre dans la chambre par des orifices de dilution 7 tandis qu'une autre partie est captée par les films de refroidissement 8 dont le détail est montré à grande échelle à la figure 2.

Le film 8 comporte une paroi amont 9 prolongée d'une languette interne 10, une partie radiale 11 percée d'orifices 12 d'entrée d 'air et une paroi aval 13, la languette 10, la partie radiale 11 et la paroi aval 13 étant conformées de telle sorte qu'entre elles soit réalisée une chambre ou poche annulaire 14 convergent vers l'aval afin de ralentir l'air entré par les orifices 12 et de le stabiliser pour que le film issu de la fente annulaire 15 réalisé entre la paroi aval 13 et la languette interne 10 soit stable et à une vitesse sensiblement égale à celle du flux d'air issu du dispositif d'injection 4 de sorte que le film partiétal de refroidissement interne de la chambre ne soit pas laminé et enfin de compte détruit dans sa progression amont-aval par la mélange air-carburant consommé dans la chambre.

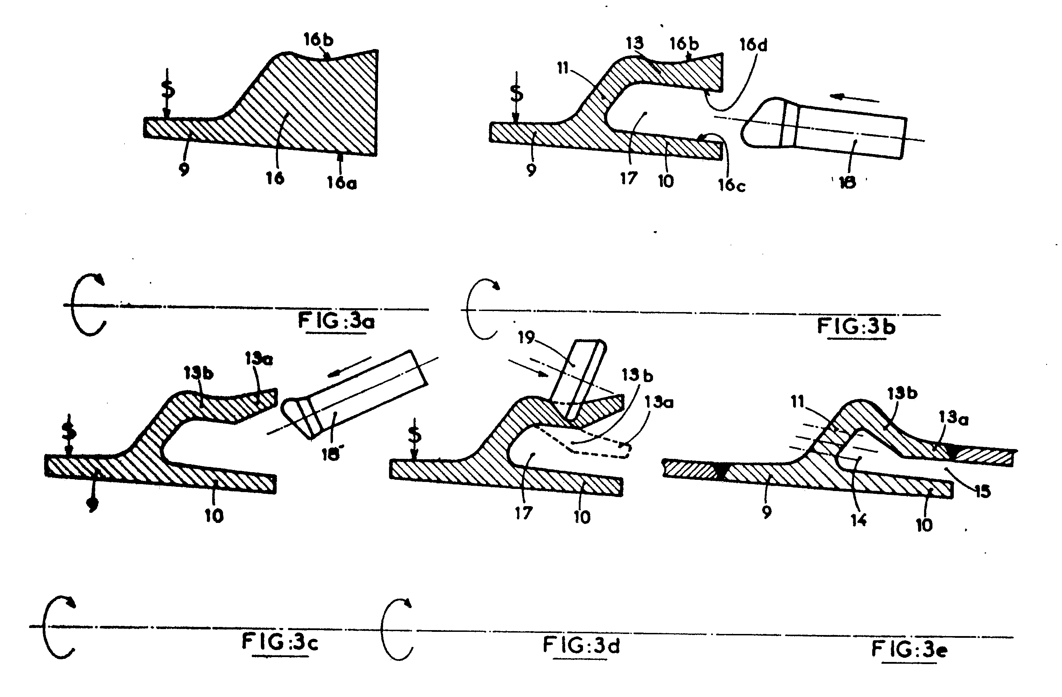

Pour réaliser selon l'invention cette structure, on usine, selon un premier mode de réalisation, dans une virole circulaire une ébauche (figure 3a) dont la partie amont est cylindrique tubulaire et formera la paroi amont 9 du film après usinage, et dont la partie aval 16 de forte épaisseur a une forme générale tronconique, ici convergeant vers l'aval vers l'axe de la virole, les figures 3a à 3e montrant la réalisation d'un film de refroidissement pour une virole externe de chambre annulaire ou tubulaire.

Le bord interne 16a est usiné dans le prolongement du cylindre interne de la paroi tubulaire amont 9 tandis que le bord externe 16b possède une double courbure, d'abord convergent dans sa partie médiane puis divergent dans sa partie aval.

Selon l'étape suivante montrée à la figure 3b, l'ébauche étant toujours prise en mors d'un tour sur sa partie amont 9, on vient usiner dans la partie aval 16 un logement tronconique 17 débouchant vers l'aval et dont les faces intérieures 16c et 16d sont parallèles entre elles ou divergentes, au moyen d'un outil de coupe 18. On définit ainsi entre le bord interne 16a et le bord intérieur 16c du logement 17 une aile tronconique interne 10, et entre le bord externe 16b et le bord intérieur 16d du du logement une aile tronconique externe 13. De même est définie une partie radiale centrale 11 qui constitue le fond du logement 17.

Ensuite (figure 3c) avec un outil 18'orienté différemment on vient amincir la partie aval de l'aile externe 13 en usinant son bord intérieur 16d parallèlement ou non du tronc de cône divergent aval du bord externe 16b.

A l'étape suivante (figure 3d), on déforme l'aile externe 13 sur la partie médiane 13b de sa longueur au moyen d'une molette 19 tournant sur elle-même et disposée extérieurement à l'ébauche jusqu'à ce que la partie aval 13a soit parallèle à la languette interne 10. La partie 13a ainsi déformée réalisera la paroi aval du film de refroidissement.

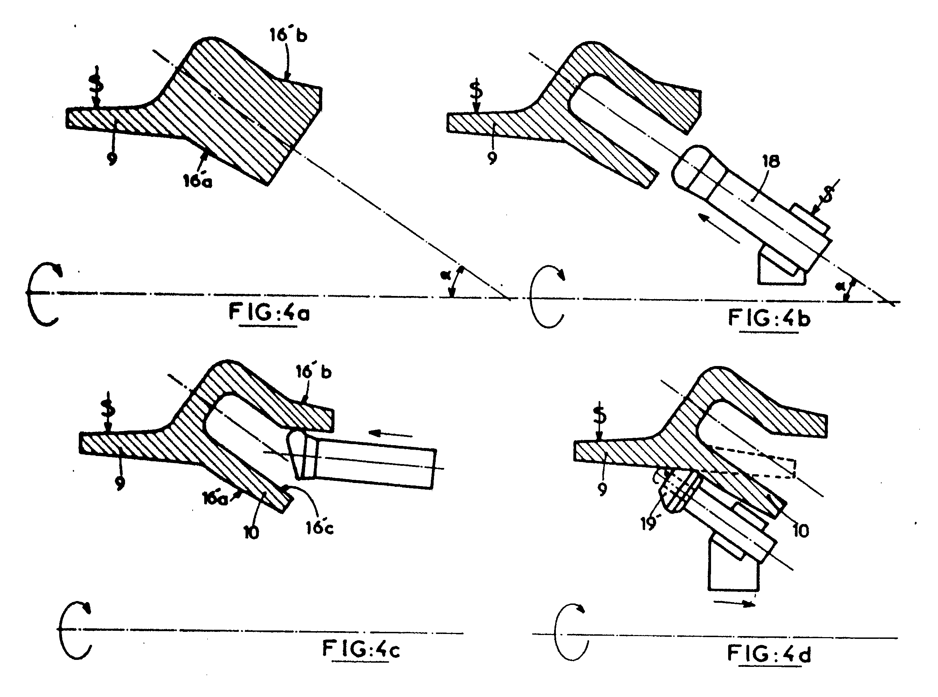

Selon la variante d'exécution montrée aux figures 4a à 4d, une différence apparait avec la variante précédente en ce que l'ébauche comporte une partie aval dont le bord intérieur 16'a est tronconique convergent vers l'aval vers l'axe du film tandis que le bord extérieur 16'b possède toujours une double courbure usinée dès les premières opérations d'ébauchage à la forme définitive externe de l'aile aval externe.

Si l'on veut réaliser un film de virole interne d'une chambre annulaire, alors la parties aval 16' de l'ébauche devra être orientée de façon divergente par rapport à l'axe de rotation de la virole. Dans les deux cas, l'angle α du tronc de cône 16 par rapport à l'axe de symétrie de la virole est compris entre 30 et 50 degrés.

Les opérations d'usinages du logement 17 montrées aux figure 4b et 4c sont identiques à celles des figures 3b et 3c. Ensuite, c'est l'aile interne 10 qui est rabattue par une molette 19' disposée intérieurement à l'ébauche, pour mettre en forme la languette aval sur la totalité de sa longueur parallèlement à la déformée de l'aile externe 13a.

Ceci réalise de la même façon dans les deux variantes d'exécution, une chambre annulaire 14 convergente vers l'aval, entre la languette 10 formée à partir de l'aile interne, le fond 11 du logement 17 de l' ébauche, la partie tronconique 13b de l'aile externe et la partie sensiblement cylindrique 13a coaxiale à la languette 10. La chambre 14 débouche vers l'aval par une fente 15 annulaire (figures 2 et 3e) formée entre la languette 10 et la paroi aval 13a.

Les opérations de déformation par moletage s'effectuent de façon simple sans extrusion de matière et ne nécessitent pas de matériel complexe, un tour parallèle étant suffisant pour réaliser toutes les opérations d'usinage.

Selon la conformation géométrique du film à réaliser, qui dépend de la position qu'il doit prendre dans la chambre de combustion (paroi externe ou interne d'une chambre annulaire, film disposé sur une paroi cylindrique de la zone primaire ou sur une paroi conique de la zone de mélange ou de la zone aval de dilution), on choisira de rabattre l'une ou l'autre des ailes aval, ou même les deux, la forme initiale de l'ébauche dépendant bien entendu du choix des étapes effectuées, sans que de telles modification de détail ne sortent du cadre de l'invention.

De même la transposition du procédé décrit ci-dessus pour une virole externe, à la réalisation d'un film pour virole interne entre, elle aussi, dans le cadre de l'invention.

Selon une autre variante, la déformation des ailes aval de l'ébauche pour former la languette intérieure 10 et la paroi aval 13a peut être réalisée par déformation plastique sur une presse à expandre ou sur une presse à emboutir moyennant l'outillage adéquat.

L'opération suivante d'usinage du film consiste à percer dans la partie centrale radiale 11 plusieurs rangées de trous 12 par perçage laser ou par faisceaux d'électrons puis à souder le film par l'extrémité de sa paroi amont 9 sur la virole amont de la chambre de combustion et par l'extrémité de sa paroi aval 13a sur la virole aval de la chambre.

Le procédé ainsi décrit a permis de réaliser des films de refroidissement dont la longueur totale était égale à 20mm pour un diamètre intérieur de virole voisin de 600mm avec une hauteur de fond de chambre 14 de tranquillisation égale à 4,6mm alors que la hauteur de fente 15 était de 2,5mm, le fond de chambre 11 étant percé de 3 rangs de 1529 trous en quinconce de diamètre 0,5mm.

L'invention a donc permis de réaliser des films de refroidissement de dimensions plus faibles que ceux actuellement réalisés, avec des moyens techniques plus simples et donc à moindre coût.

## Revendications

1. Procédé de réalisation d'un dispositif de création d'un film de refroidissement de faible longueur pour chambre de combustion de grand diamètre de turbomachine d'aviation, ledit dispositif comportant une paroi amont (9) de forme généralement cylindrique, une chambre annulaire (14) alimentée en air par des trous (12) et communiquant avec l'intérieur de la chambre par une fente annulaire (15) formée entre la paroi aval (13a) de la chambre et une languette (10) disposée dans le prolongement de la paroi amont, caractérisé en ce que :

   - on réalise une ébauche circulaire (9,16) au tour, ladite ébauche comportant une partie amont (9) de forme générale cylindrique et une partie aval (16) renflée de forme générale cylindro-tronconique ;
   - on usine dans la partie aval un logement (17) tronconique débouchant vers l'aval, comportant une face interne d'axe confondu avec celui de l'ébauche et une face externe comportant une double courbure, les deux faces définissant deux ailes aval l'une interne (10), l'autre externe (13);
   - on déforme au moins une des deux ailes aval par repoussage pour former d'une part la paroi aval (13a) du film de refroidissement et d'autre part sa languette interne (10) ;
   - On perce des rangées d'orifices (12) dans la partie radiale (11) séparant la languette (10) et la parci aval (13a).

2. Procédé d'usinage d'un dispositif de création d'un film de refroidissement selon la revendication 1 pour une virole interne de chambre annulaire caractérisé en ce que la partie aval (16) cylindro-tronconique de l'ébauche est orientée de façon divergente vers l'aval par rapport à l'axe de symétrie de la virole d'un angle α compris entre 30 et 50 degrés.

3. Procédé d'usinage d'un dispositif de création d'un film de refroidissement selon la revendication 1 pour une virole externe de chambre tubulaire ou annulaire caractérisé en ce que la partie aval tronconique (16) de l'ébauche est orientée de façon convergente vers l'aval par rapport à l'axe de symétrie de la virole d'un angle α compris entre 30 et 50 degrés.

4. Procédé d'usinage selon l'une quelconque des revendications 1 à 3 caractérisé en ce que l'on déforme la partie médiane (13b) de l'aile aval externe (13) de telle sorte que la partie aval (13a) de ladite aile aval externe soit parallèle à la languette interne (10), pour former une chambre annulaire (14) convergente de tranquillisation débouchant en aval sur une fente annulaire (15) à faces cylindriques coaxiales à l'axe de la virole.

5. Procédé d'usinage selon l'une quelconque des revendications 1 à 4 d'un dispositif de création d'un film de refroidissement dont la languette interne (10) a été usinée de façon tronconique par rapport à la paroi amont (9), caractérisé en ce que l'on déforme ladite languette interne (10) de telle sorte qu'elle soit parallèle à la partie aval (13a) de l'aile aval externe (13) pour former une chambre annulaire (14) convergente de tranquillisation débouchant en aval sur une fente annulaire (15) à faces cylindriques coaxiales à l'axe de la virole.

6. Procédé d'usinage selon l'une quelconque des revendications 1 à 5, caractérisé en ce qu'on déforme les ailes aval (10,13b) de l'ébauche par repoussage à la molette (19) sans extrusion de la matière.

7. Procédé d'usinage selon l'une quelconque des revendications 1 à 5, caractérisé en ce qu'on déforme les ailes aval de l'ébauche par déformation plastique sur une presse à emboutir.

**Claims**

1. Method of producing a device for creating a cooling film of slight length for an aviation turbine engine combustion chamber of large diameter, said device comprising an upstream wall (9) of generally cylindrical shape, an annular chamber (14) fed with air through holes (12) and communicating with the interior of the chamber by way of an annular slot (15) formed between the downstream wall (13a) of the chamber and a tongue (10) formed in the extension of the upstream wall, characterised in that:
   - a circular blank (9, 16) is made in a lathe, the said blank comprising an upstream part (9) of cylindrical general shape and an enlarged downstream part (16) of cylindro-frustoconical general shape;
   - in the downstream part a frustoconical recess (17) is machined which leads out towards the downstream side and has an inside face whose axis is identical with that of the blank and an outside face having a double curvature, the two faces defining two downstream wings, one (10) internal and the other (13) external;
   - at least one of the two downstream wings is deformed by a pressing-back operation to form on the one hand the downstream wall (13a) of the cooling film and on the other hand its inside tongue (10);
   - rows of apertures (12) are pierced in the radial portion (11) separating the tongue (10) from the downstream wall (13a).

2. A method of machining a device for creating a cooling film according to Claim 1 for an inner ring of an annular chamber, characterised in that the cylindrofrustoconical downstream part (16) of the blank is directed to diverge in the downstream direction in relation to the axis of symmetry of the ring by an angle α between 30 and 50 degrees.

3. Method of machining a device for creating a cooling film according to Claim 1 for an outer ring of a tubular or annular chamber, characterised in that the frustoconical downstream part (16) of the blank is directed to converge in the downstream direction in relation to the axis of symmetry of the ring by an angle α between 30 and 50 degrees.

4. Machining method according to any one of Claims 1 to 3, characterised in that the middle part (13b) of the outer downstream wing (13) is deformed in such a manner that the downstream part (13a) of the said outer downstream wing is parallel to the inner tongue (10) so as to form a convergent annular tranquillisation chamber (14) leading out in the downstream direction onto an annular slot (15) having cylindrical faces coaxial with the axis of the ring.

5. Method according to any one of Claims 1 to 4 for machining a device for creating a cooling film whose inner tongue (10) has been machined to a frustoconical shape relative to the upstream wall (9), characterised in that the said inside tongue (10) is deformed in such a manner as to be parallel to the downstream part (13a) of the outer downstream wing (13) in order to form a convergent annular tranquillisation chamber (14) leading out in the downstream direction onto an annular slot (15) having cylindrical faces coaxial with the axis of the ring.

6. Machining method according to any one of Claims 1 to 5, characterised in that the downstream wings (10, 13b) of the blank are deformed by a pushing-back operation with the aid of a pressing roller (19) without extrusion of material.

7. Machining operation according to any one of Claims 1 to 5, characterised in that the downstream wings of the blank are deformed by plastic deformation in a drawing press.

**Patentansprüche**

1. Verfahren zur Herstellung einer Vorrichtung zur Erzeugung eines Kühlfilms geringer Länge für eine Flugzeug-Strahltriebwerk-Brennkammer mit großem Durchmesser, wobei die Vorrichtung eine stromaufwärtige Wandung (9) von im wesentlichen zylindrischer Gestalt aufweist, ferner eine ringförmige Kammer (14), in die durch Öffnungen (12) Luft eingespeist wird und die mit dem Endbereich der Brennkammer über einen ringförmigen Schlitz (15) verbunden ist, der zwischen der stromabwärtigen Wandung (13a) der Brennkammer und einer in Verlängerung der stromaufwärtigen Wandung angeordneten Zunge ausgebildet ist,

dadurch gekennzeichnet,

daß man auf der Drehmaschine einen ringförmigen Rohling (9, 16) herstellt mit einem stromaufwärtigen Teil (9) von im wesentlichen zylindrischer Gestalt und einem bauchigen stromabwärtigen Teil (16) von im wesentlichen zylindrisch-kegelstumpfförmiger Gestalt,

daß man in dem stromabwärtigen Teil eine kegelstumpfförmige, nach der stromabwärtigen Seite hin offene Aufnahme (17) herausarbeitet mit einer Innenfläche, deren Achse mit der Achse des Rohlings zusammenfällt, und einer Außenfläche mit doppelter Krümmung, wobei diese beiden Flächen zwei stromabwärtige Flügel begrenzen, von denen der eine (10) innen und der andere (13) außen liegt,

daß man zur Bildung einerseits der stromabwärtigen Wandung (12a) des Kühlfilms und andererseits seiner inneren Zunge wenigstens einen der beiden stromabwärtigen Flügel durch Drücken verformt,

und daß man in dem die Zunge (10) und die stromabwärtige Wandung (13a) voneinander trennenden radialen Teil (11) Reihen von Öffnungen (12) bohrt,

2. Verfahren zum Bearbeiten einer Vorrichtung zur Erzeugung eines Kühlfilms nach Anspruch 1 für den Innenring einer ringförmigen Brennkammer, dadurch gekennzeichnet, daß der zylindrischkegelstumpfförmige stromabwärtige Teil des Rohlings zur stromabwärtigen Seite hin unter einem zwischen 30° und 50° liegenden Winkel Alpha zur Symmetrieachse des Rings divergierend ausgerichtet wird.

3. Verfahren zum Bearbeiten einer Vorrichtung zur Erzeugung eines Kühlfilms nach Anspruch 1 für einen rohrförmigen oder ringförmigen Außenring, dadurch gekennzeichnet, daß der kegelstumpfförmige stromabwärtige Teil (16) des Rohlings zur stromabwärtigen Seite hin unter einem zwischen 30° und 50° liegenden Winkel Alpha zur Symmetrieachse des Rings konvergierend ausgerichtet wird.

4. Bearbeitungsverfahren nach einem der Ansprüche 1 bis 3, dadurch gekennzeichnet, daß man den mittleren Teil (13b) des stromabwärtigen äußeren Flügels (13) so verformt, daß der stromabwärtige Teil (13a) dieses äußeren Flügels parallel zu der inneren Zunge (10) verläuft, um eine konvergierende ringförmige Beruhigungskammer (13) zu bilden, die auf der stromabwärtigen in einem ringförmigen Schlitz (15) mit zur Achse des Rings koaxialen zylindrischen Seiten mündet.

5. Bearbeitungsverfahren nach einem der Ansprüche 1 bis 4, für eine Vorrichtung zur Erzeugung eines Kühlfilms, deren innere Zunge (10) relativ zur stromaufwärtigen Wandung (9) kegelstumpfförmig bearbeitet wurde, dadurch gekennzeichnet, daß man die innere Zunge (10) so verformt, daß sie parallel zu dem stromabwärtigen Teil (13a) des äußeren stromabwärtigen Flügels (13) verläuft, um eine konvergierende ringförmige Beruhigungskammer (14) zu bilden, die auf der stromabwärtigen in einem ringförmigen Schlitz (15) mit zur Achse des Rings koaxialen zylindrischen Seiten mündet.

6. Bearbeitungsverfahren nach einem der Ansprüche 1 bis 5, dadurch gekennzeichnet, daß man die stromabwärtigen Flügel (10, 13b) des Rohlings durch Drücken mittels Walze (19) ohne Materialextrusion verformt.

7.   Bearbeitungsverfahren nach einem der Ansprüche 1 bis 5, dadurch gekennzeichnet, daß man die stromabwärtigen Flügel des Rohlings durch plastisches Verformen auf einer Tiefziehpresse verformt.

FIG: 1

FIG: 2

FIG:3a

FIG:3b

FIG:3c

FIG:3d

FIG:3e

EP 0 268 505 B1

FIG:4a

FIG:4b

FIG:4c

FIG:4d

EP 0 268 505 B1